# EUROPEAN PATENT APPLICATION

(11) **EP 1 715 024 A2**
(43) Date of publication of application: **25.10.2006**
(21) Application number: 06112854.2
(22) Date of filing: 20.04.2006
(51) Int. Cl.: C09K 19/02

(54) **Methods of aligning negative dielectric anisotropic liquid crystals**

(30) Priority: 20.04.2005 US 110208
(71) Applicant: Toppoly Optoelectronics Corp., 350 Chu-Nan, Miao-Li Country (TW)
(72) Inventor: Wen, Chien-Hui, Florida, FL 32826 (US); Wu, Shin-Tson, Oviedo, FL 32765 (US)
(74) Representative: Patentanwälte Kewitz & Kollegen

(57) **Abstract**

A method for alignment of a homeotropic liquid crystal cell by doping a percentage of a positive Δε (dielectric anisotropy), neutral (Δε approximately 0), or negative Δε liquid crystal material, a high contrast ratio homeotropic alignment of difluoro compounds or mixtures is achieved, independent of operating temperature. Without special requirement on alignment layers, rubbing methods or pretilt angles, the uniform aligned homeotropic liquid crystal cell results even at high temperature and the physical properties, such as the birefringence and viscosity, of the liquid crystal mixtures are improved. In an embodiment the method the homeotropic vertically aligned nematic liquid crystal cells are used in the production of high contrast microdisplays.

## Description

This invention relates to liquid crystal, and more specifically, to alignment of a homeotropic liquid crystal cell by doping a percentage of a positive, neutral, or negative liquid crystal material into another negative liquid crystal material, to produce a high contrast ratio homeotropic alignment of difluoro compounds or mixtures, independent of operating temperature.

### BACKGROUND AND PRIOR ART

Homeotropic alignment of liquid crystal, also called vertical alignment, has been widely used for information displays, such as laptop and desktop computers, TVs, cell phones, and personal digital assistants, and the like. A well-aligned vertical alignment cell exhibits an excellent contrast ratio between crossed polarizers for the incident light at normal angle, and the contrast ratio is insensitive to the incident light wavelength, the liquid crystal cell gap, and the operating temperature. To obtain the useful electro-optic effects of a vertical alignment cell using a longitudinal electric field, a negative dielectric anisotropic liquid crystal mixture, i.e. Δε = ε_{//-}ε_{⊥} <0 should be employed. For active matrix displays, high resistivity is another crucial requirement for obtaining a high voltage-holding ratio and to avoid image flickering. To achieve high resistivity, fluorinated compounds are commonly used and to obtain negative Δε, the fluoro groups are usually in the lateral positions.

Birefringence and viscosity are important factors affecting the response time of LC devices. To obtain high birefringence, large negative Δε, and high resistivity, laterally (2, 3) difluorinated biphenyl, terphenyl, and tolane liquid crystals are the natural choices. The synthesis of difluoronated terphenyl LCs has been described in Gray, "The synthesis and transition of some 4,4"-Dialkyl-and 4,4" Alkoxyalkyl-1,1': 4',1"-terphenyls with 2,3 or 2',3'-Difluoro substituents and their biphenyl analogues", J. Chem. Soc., Perkin Trans. 2, (1989) p. 2041. However, the difluoro-tolane and terphenyl mixtures are very difficult to align in a homeotropic cell. A poor alignment leads to a low contrast ratio. Without adequate alignment, the advantages of homeotropic cells are not realized.

Several methods for achieving homeotropic alignment have been developed and are described in J. L. Janning, "Thin film surface orientation for liquid crystals", Appl. Phys. Lett. Vol. 21, No. 4 (Aug. 1972), pp. 173-174 and A. M. Lackner, et al., "Photostable tiled-perpendicular alignment of liquid crystals for light valves", Proc. SID, 31, 321 (1990). However, even when following the disclosed methods, aligning the laterally difluorinated tolane and terphenyl mixtures remains a difficult task.

Especially, the lateral difluoro terphenyls and tolanes are difficult to align in a buffed polyimide LC cell or a sputtered SiO₂ cell. Moreover, the figure-of-merit of the doped mixtures is significantly improved over the host mixture. The novel method of the present invention produces a stable homeotropic aligned LC cell at elevated temperature as high as approximately 100°C. By doping a positive, negative, or neutral dielectric anisotropic LC material, an excellent homeotorpic cell using a buffed polyimide alignment layers is acheived. Moreover, the figure of merit, FoM = K₃₃Δn²/γ1; wherein K₃₃ is the bend elastic constant, Δn is the LC birefringence, and γ1 is the rotational viscosity, of the doped liquid crystal mixture is increased.

### SUMMARY OF THE INVENTION

A first object of this invention is to provide a new method of producing a stable homeotropic alignment liquid crystal cell. By mixing a positive, negative, or neutral Δε liquid crystal material together, a molecular alignment of the lateral difluoro terphenyls and tolanes is achieved.

A second objection of the present invention is to provide a method for aligning a homeotropic liquid crystal cell that is applicable to a wide range of liquid crystal materials, alignment layers, and rubbing methods.

A third object of the present invention is to provide a method for obtaining a stable vertical alignment cell having a uniform alignment, an excellent dark state and that is not dependent on temperature which is particularly important for projection displays because due to the thermal heating effect from the arc lamp, the LCD panel temperature is typically between approximately 50°C and approximately 60°C.

A fourth objective of the present invention is to provide a novel method of formulating a desirable mixture to achieve alignment of the homeotropic liquid crystal cell. By properly selecting dopant and the weight percentage of the liquid crystal material, the physical properties, such as birefringence and viscosity of the liquid crystal mixture, is adjusted to meet the device requirements. Additionally, proper selection of the dopant provides a significant improvement in the response time.

The method of the present invention produces a stable homeotropic aligned liquid crystal cell. By doping a positive, negative, or neutral dielectric anisotropic liquid crystal material into the negative dielectric anisotropic liquid crystal mixture, the alignment of the liquid crystal mixture is improved in homeotropic aligned cell. The host negative dielectric anisotropic liquid crystal mixtures are based on laterally 2, 3 difluoro-tolane or terphenyl compounds. The selected percentage of dopant is dependent on the properties of the host negative liquid crystal compound/mixture and on the properties of the dopant. For example, the terphenyl mixtures are more difficult to align than the tolane mixtures, thus the required weight percentage of dopant is higher. Moreover, the required weight percentage of positive, negative or neutral material provided to improve the alignment of pure 2,3 difluoro-terphenyl is quite different, and the percentage is not the same as the weight percentage of eutectic mixture. The preferred weight percentage of the positive or neutral dopant liquid crystal is between approximately 5% and approximately 15%, in the preferred embodiment the weight percentage of negative material is approximately 30%.

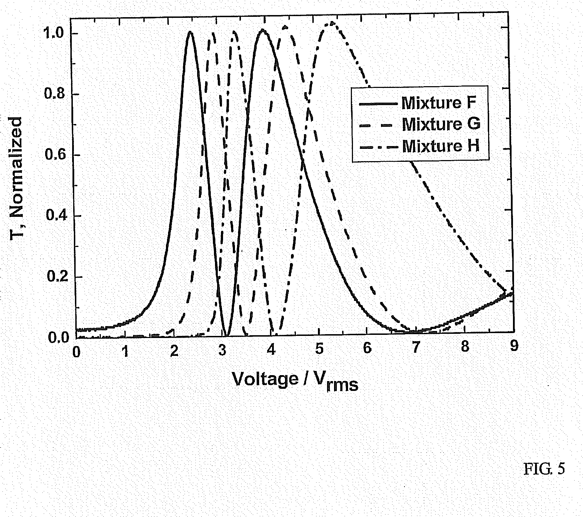

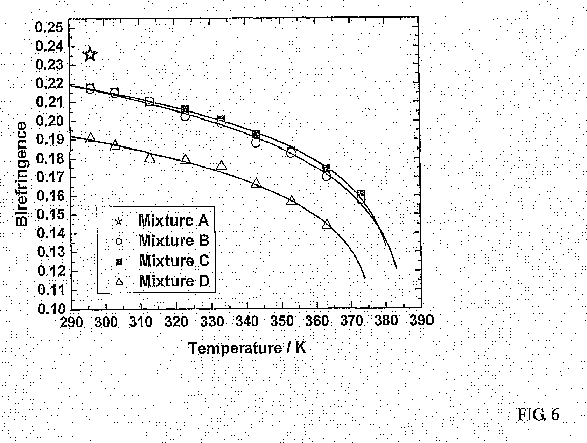

Also, according to the present invention, any structure with positive, negative or neutral Δε liquid crystal material may be used. Therefore, the physical properties, such as threshold voltage, dielectric anisotropy, birefringence, and viscosity of the liquid crystal mixtures are adjusted to meet device performance requirements by selecting a proper dopant. For example, the mixture's birefringence is slightly decreased by doping a low birefringence (Δn approximately 0.1) positive liquid crystal material, but the figure of merit (FoM = K₃₃Δn²/γ₁) is increased by approximately 1.7 times of the host negative terphenyl mixture because of the low viscosity, as shown in figures 5 and 6. As a result, the response time is increased.

Further objects and advantages of this invention will be apparent from the following detailed description of preferred embodiments which are illustrated in the accompanying drawings.

### BRIEF DESCRIPTION OF THE FIGURES

FIG. 1 is a graph showing the voltage-dependent transmittance of mixture A in homeotropic cell between crossed polarizers.
FIG. 2 is a graph showing a comparison of the voltage-dependent transmittance of homeotropic cell between crossed polarizers for mixtures A and B.
FIG. 3 is a graph showing a comparison of the voltage-dependent transmittance of homeotropic cell between crossed polarizers for mixtures A and C.
FIG. 4 is a graph showing a comparison of the voltage-dependent transmittance of homeotropic cell between crossed polarizers for mixtures A, D and E.
FIG. 5 is a graph showing a comparison of the voltage-dependent transmittance of mixtures F, G and H in homeotropic cell between crossed polarizers.
FIG. 6 is a graph showing a comparison of the temperature-dependent birefringence of mixtures A, B, C and D.
FIG. 7 is a graph showing a comparison of the temperature-dependent figure-of-merit (µm²/ms) of mixtures A, B, C and D at λ = 633nm.

### DESCRIPTION OF THE PREFERRED EMBODIMENTS

Before explaining the disclosed embodiments of the present invention in detail it is to be understood that the invention is not limited in its application to the details of the particular arrangements shown since the invention is capable of other embodiments. Also, the terminology used herein is for the purpose of description and not of limitation.

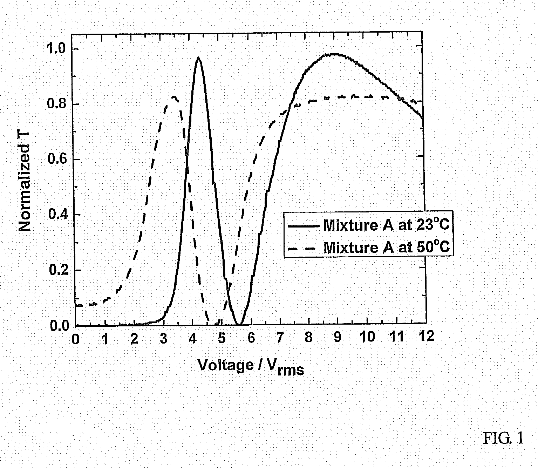

Fig. 1 shows an example of voltage-dependent transmittance of a terphenyl based binary mixture A. Mixture A is a laterally (2, 3) difluoro terphenyl type binary mixture and the composition of mixture A is shown in Table 1. In Fig. 1, the solid and dashed lines represent mixture A at 23°C and 50°C, respectively.

**Table 1**

| **LC components** | **I Wt %** |
|---|---|
| 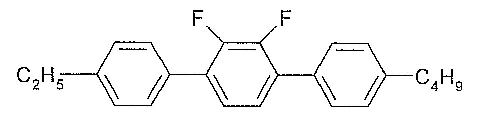 | 35 |
| 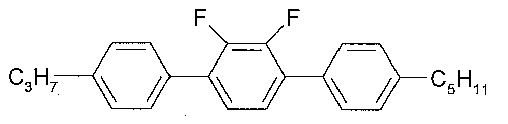 | 65 |

This mixture exhibits good dark state at room temperature, but the light begins to leak when the temperature varies from room temperature. The threshold voltage smeared and decreased to a lower voltage when the temperature increased above room temperature.

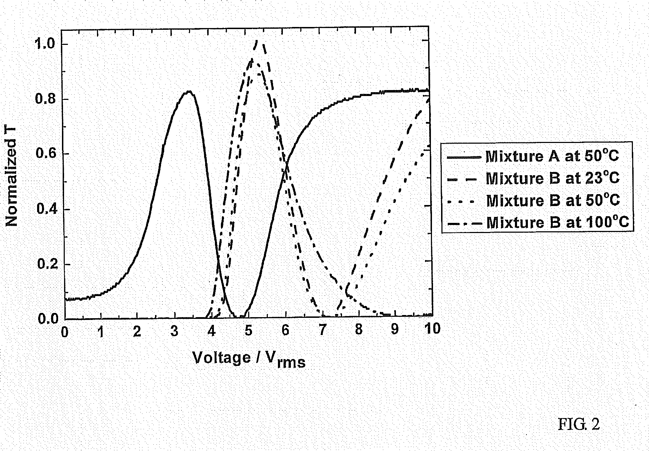

Fig. 2 shows the voltage-dependent transmittance of mixtures A and B. The composition of mixture B is provided in Table 2. The solid line represents mixture A at 50°C while the dashed, dotted and dash-dot lines in Fig. 2 represent mixture B at 23°C, 50°C and 100°C, respectively.

**Table 2**

| **Mixtures** | **Dopant** | **Wt % of Mixture A** | **Wt% of Dopant** |
|---|---|---|---|
| B | MLC-9200-000 | 90 | 10 |
| C | ZLI-3086 | 90 | 10 |
| D | MLC-6608 | 70 | 30 |
| E | MLC-6608 | 87 | 13 |

Mixture B is an example and consists 90% of mixture A and 10% of positive dielectric anisotropic LC mixture such as MLC-9200-000, a mixture from Merck, having a Δε of approximately 4. When compared to the voltage-dependent transmittance of mixture A at 50°C, the voltage-dependent transmittance of Mixture B maintains a dark state and uniform alignment even when the temperature is close to clearing temperature (T_{c}).

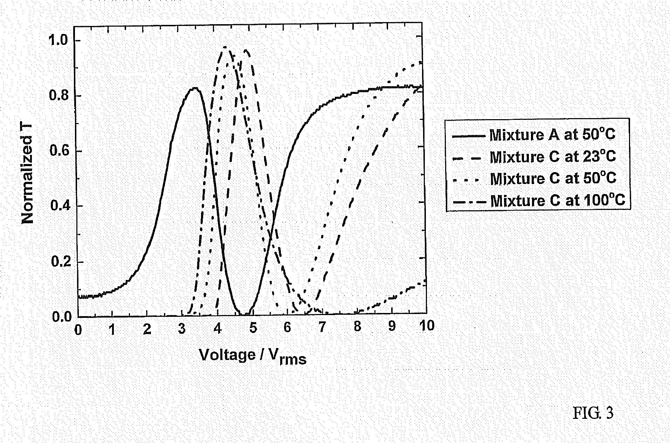

Fig. 3 shows the voltage-dependent transmittance of mixture C, the composition of which is provided in Table 2. In Fig. 3, the solid line represents mixture A at 50°C while the dashed, dotted and dash-dot lines represent mixture C at 23°C, 50°C and 100°C, respectively. Sample mixture C consists of 90% mixture A and 10% neutral dielectric anisotropic liquid crystal mixture such as ZLI-3086, a mixture from Merck, having a Δε of approximately 0.06. Compared with the voltage-dependent transmittance of mixture A at 50°C, the voltage-dependent transmittance of Mixture C maintains a dark state and uniform alignment even when the temperature is close to clearing temperature (T_{c}).

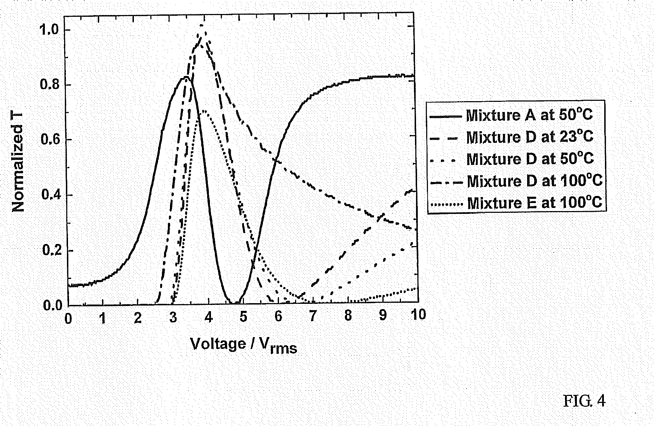

Fig. 4 shows the voltage-dependent transmittance of mixture D and E. The composition of mixture D and E are provided in Table 2. The solid line represents mixture A at 50°C while the dashed, dotted and dash-dot lines represent mixture D at 23°C, 50°C, and 100°C, respectively, and the short-dot line represents mixture E at 100°C. Mixture D includes 70% of mixture A and 30% of negative dielectric anisotropic LC mixture such as MLC-6608, a mixture from Merck, having a Δε of approximately -4.2. Mixture E consists of 87% of mixture A and 13% of MLC-6608. When compared to the voltage-dependent transmittance of mixture A at 50°C, the voltage-dependent transmittance of Mixture D maintains a dark state and uniform alignment even when the temperature approaches the clearing temperature (T_{c}). However, if the weight percentage of dopant is too low, such as in mixture E, the transmittance at on-state is poor and the contrast ratio is decreased.

Fig. 5 shows the voltage-dependent transmittance of mixture F, G and H. Solid, dashed and dash-dot lines represent mixture F, G and H, respectively. Mixture F is a laterally (2, 3) difluoro tolane based mixture. The composition of mixture F is provided in Table 3. Mixtures G and H are mixture F doping with different weight percentage of PTP-2NCS. The molecular structure of PTP-2NCS and composition of mixture G and H are shown in Table 4.

**Table 3**

| LC components | Wt % |
|---|---|
| 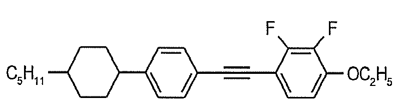 | 18 |
| 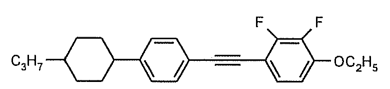 | 20 |
| 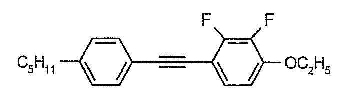 | 21 |
| 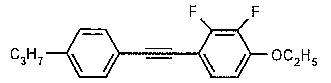 | 36 |
| 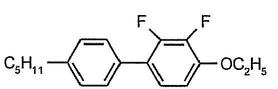 | 5 |

**Table 4**

| **Mixtures** | **Dopant (PTP-2NCS)** | **Wt % of Mixture F** | **Wt% of Dopant** |
|---|---|---|---|
| G | 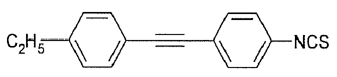 | 95 | 5 |
| H | | 90 | 10 |

The melting point (Tₘ), clearing point (T_{c}), birefringence (Δn), figure-of-merit (FoM = K₃₃·Δn²/γ₁) and dielectric anisotropy (Δε) of mixture G and H at room temperature are provided in Table 5.

**Table 5**

| Mixtures | Tₘ(°C) | T_{c}(°C) | Δn | γ₁/K₃₃ | FoM | Δε |
|---|---|---|---|---|---|---|
| A | 23.64 | 112.31 | 0.236 | 2.27 | 4.73 | -4.3 |
| B | 21.04 | 113.08 | 0.216 | 3.56 | 7.39 | -3.3 |
| C | 16.23 | 110.24 | 0.217 | 3.8 | 5.84 | -4.4 |
| D | 6.02 | 104.65 | 0.190 | 2.35 | 6.82 | -3.2 |
| G | -51.8 | 110.2 | 0.30 | 19.0 | 4.73 | -4.3 |
| H | -52.0 | 107.0 | 0.31 | 13.0 | 7.39 | -3.3 |

| | | | | | | |
|---|---|---|---|---|---|---|
| * Since mixture F has poor alignment in PI cell at room temperature, the birefringence and FoM can not be measured in PI aligned cell. | | | | | | |

Mixture F is a sample based on difluoro tolane type mixture. Mixture G consists of 95% of mixture F and 5 % of positive dielectric anisotropic liquid crystal compound such as PTP-2NCS and mixture H consists 90% of mixture F and 10% of PTP-2NCS. Referring back to Fig. 5, compared to the voltage-dependent transmittance of mixture F at 23°C, doping 5% of PTP-2NCS suppresses the dark state light leakage noticeable, but is still not perfect as shown by the dashed lines which represent mixture G. Increasing PTP-2NCS to 10% (mixture H) leads to an excellent dark state and a sharp threshold.

Fig. 6 shows the temperature-dependent birefringence of mixture A, B, C and D at λ = 633 nm. The birefringence of mixture B and C is approximately 0.217 and Δn is approximately 0.19 for mixture D. Since the dopants selected have lower birefringence (Δn = 0.08~0.11 at room temperature) than mixture A, the birefringence of mixture B, C and D drop slightly. Melting point (Tₘ) and clearing point (Tc) is measured by DSC (DSC; TA - 100). An, γ₁/K₃₃ and FoM are measured at λ = 633nm, and Δε is measure at f = 1kHz.

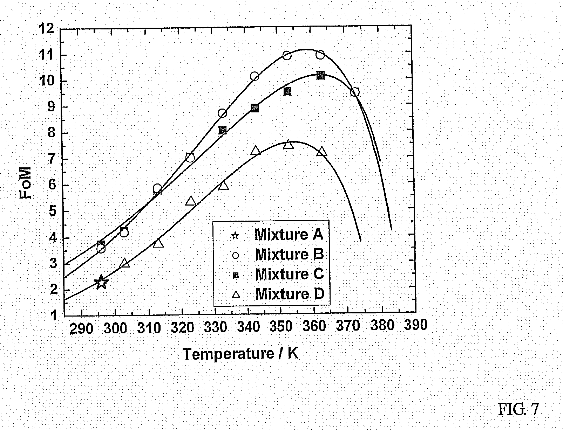

Fig. 7 shows the temperature-dependent figure-of-merit (FoM) of mixture A, B, C and D. The FoM of mixture B, C and D is 3.55, 3.8 and 2.4, respectively, at room temperature. The FoM of Mixture A is very closed to Mixture D. Since the dopants we selected have lower visco-elastic coefficient than mixture A, the FoM of mixture B and C increased to approximately double.

An important aspect of the present invention is the utilization of normally black homeotropic vertically aligned nematic liquid crystal cells. A homeotropic vertical aligned nematic (VAN) liquid crystal cell can be described as a liquid crystal cell in which the liquid crystal molecules are oriented in a direction approximately perpendicular to the cell surface. Generally, pure negative dielectric anisotropic liquid crystal mixtures are aligned in homeotropic liquid crystal cells at room temperature, but the alignment becomes non-uniform above room temperature and the light leakage at dark state increases which results in a poor contrast ratio.

According to the method of the present invention, a uniform aligned homeotropic liquid crystal cell is developed by changing the properties of the filled liquid crystals. The liquid crystal is a combination of positive, neutral and negative dielectric anisotropic liquid crystals. The negative dielectric anisotropic liquid crystal is the dominated part of the mixture. By doping some positive, neutral or negative dielectric anisotropic liquid crystal into the host negative dielectric anisotropic liquid crystal, the ultra high contrast ratio is achieved, and the alignment of liquid crystal is still uniform at temperatures above room temperature.

In an embodiment of the present invention, the homeotropic vertically aligned nematic liquid crystal (LC) cells are used in the production of high contrast microdisplays. By doping positive, negative or neutral dielectric anisotropic liquid crystal material into the negative liquid crystal mixture, the alignment problem in homeotropic aligned cell is eliminated, and ultra high contrast ratio is achieved. Without special requirement on alignment layers, rubbing methods or pretilt angles, the uniform aligned homeotropic LC cell is produced even at high temperature. Moreover, the physical properties, such as the birefringence and viscosity, of the LC mixtures are improved. While the invention has been described, disclosed, illustrated and shown in various terms of certain embodiments or modifications which it has presumed in practice, the scope of the invention is not intended to be, nor should it be deemed to be, limited thereby and such other modifications or embodiments as may be suggested by the teachings herein are particularly reserved especially as they fall within the breadth and scope of the claims here appended.

## Claims

1. A method of producing stable aligned homeotropic liquid crystal cells comprising the steps of:
providing a first negative dielectric anisotropic liquid crystal material; and
mixing at least one of a positive, a neutral and a second negative dielectric anisotropic liquid crystal material into said first negative dielectric anisotropic liquid crystal material to produce a a higher contrast ratio, i.e., better molecular alignment, or a larger figure-of-merit than said first negative dielectric anisotropic liquid crystal host.

2. The method of claim 1, wherein said mixing step comprises the steps of:
providing said positive dielectric anisotropic liquid crystal material; and
mixing said positive dielectric anisotropic liquid crystal material with said first negative dielectric anisotropic liquid crystal material to form a mixture having a concentration of said positive dielectric anisotropic liquid crystal material within the range from approximately 0.1 percent by weight to approximately 99.9 percent by weight.

3. The method of claim 2, wherein said concentration of said positive dielectric anisotropic liquid crystal material is within a range from approximately 3 percent by weight to approximately 25 percent by weight.

4. The method of claim 1, wherein said mixing step comprises the steps of:
providing said neutral dielectric anisotropic liquid crystal material; and
mixing said neutral dielectric anisotropic liquid crystal material with said first negative dielectric anisotropic liquid crystal material to form a mixture having a concentration of said neutral dielectric anisotropic liquid crystal material within the range from approximately 0.1 percent by weight to approximately 99.9 percent by weight.

5. The method of claim 4, wherein said concentration of said neutral dielectric anisotropic liquid crystal material is within a range from approximately 3 percent by weight to approximately 25 percent by weight.

6. The method of claim 1, wherein said mixing step comprises the steps of:
providing said second negative dielectric anisotropic liquid crystal material; and
mixing said second negative dielectric anisotropic liquid crystal material with said first negative dielectric anisotropic liquid crystal material to form a mixture having a concentration of said second negative dielectric anisotropic liquid crystal material within the range from approximately 0.1 percent by weight to approximately 99.9 percent by weight.

7. The method of claim 6, wherein said concentration of said second negative dielectric anisotropic liquid crystal material is within a range from approximately 10 percent by weight to approximately 90 percent by weight.

8. The method for producing a liquid crystal media comprising the steps of:
providing a negative dielectric anisotropic liquid crystal material;
providing a positive dielectric anisotropic liquid crystal material;
providing a neutral dielectric anisotropic liquid crystal material; and
mixing said positive dielectric anisotropic liquid crystal material and said neutral dielectric anisotropic liquid crystal material with said first negative dielectric anisotropic liquid crystal material to produce a higher contrast ratio, i.e., better molecular alignment, or a larger figure-of-merit than said first negative dielectric anisotropic liquid crystal host.

9. The method of claim 8, wherein a concentration of said positive dielectric anisotropic liquid crystal material and said neutral dielectric anisotropic liquid crystal is within a range from approximately 0.1 percent by weight to approximately 99.9 percent by weight.
